# EUROPÄISCHE PATENTSCHRIFT

(11) **EP 2 734 317 B1**
(45) Veröffentlichungstag und Bekanntmachung des Hinweises auf die Patenterteilung: **27.04.2016**
(21) Anmeldenummer: 12746268.7
(22) Anmeldetag: 20.07.2012
(51) Int. Cl.: B21F 99/00, B23P 19/04, B23P 21/00, B65D 45/06

(54) **VERFAHREN UND VORRICHTUNG ZUR MONTAGE EINES DRAHTBÜGEL-BEHÄLTERS**
METHOD AND APPARATUS FOR ASSEMBLING A WIRE CLIP CONTAINER
PROCÉDÉ ET DISPOSITIF DE MONTAGE D'UN RÉCIPIENT À ANSE EN FIL MÉTALLIQUE

(30) Priorität: 21.07.2011 DE 102011052051
(43) Veröffentlichungstag der Anmeldung: 28.05.2014
(73) Patentinhaber: Schrick, Matthias, 37688 Beverungen (DE)
(72) Erfinder: Schrick, Matthias, 37688 Beverungen (DE)
(74) Vertreter: Rolf, Gudrun, LL.M
(86) Internationale Anmeldenummer: PCT/DE2012/100218
(87) Internationale Veröffentlichungsnummer: WO 2013/010536

(56) Entgegenhaltungen:
- FR-A- 1 369 457
- FR-A1- 2 588 529
- FR-A1- 2 959 148

## Beschreibung

Die Erfindung betrifft ein Verfahren und eine Vorrichtung zur Montage eines Drahtbügel-Behälters, wie etwa aus Glas, Steingut, Porzellan oder Keramik, gemäß den Oberbegriffen der Ansprüche 1 und 5

In der DE 7808785 U1 ist ein Gefäß mit Deckel als Einmachglas exemplarisch beschrieben. So ein Gefäß mit Deckel bzw. ein Drahtbügel-Behälter besteht im Prinzip aus zwei Hauptelementen, dem unteren Behälter und dem oberen Deckel mit Gummidichtring, sowie aus mehreren Drahtelementen, die der Verbindung der beiden Hauptelemente dienen und die nach Abschluss der Montage ein Klappscharnier und eine Klemmvorrichtung bilden, die den Deckel auf den unteren Behälter presst. Diese Drahtelemente setzen sich insbesondere aus einem unteren Einfassungsring, einer Spange, einem oberen Einfassungsring, einem Spannbügel und einem Spannhebel zusammen.

Nachteilig an dem bekannten Drahtbügel-Behälter ist, dass der Zusammenbau der einzelnen Elemente nur von Hand erfolgen kann, sodass die Produktion solcher praktischen Behälter insgesamt sehr unwirtschaftlich ist.

Weiterhin ist ein Verfahren zur Montage eines Drahtbügel-Behälters bekannt, FR 2 959 148 A1, welches jedoch nur halbautomatisiert arbeitet.

Aufgabe der Erfindung ist es, eine Vorrichtung und ein Verfahren zur maschinellen Montage solcher Drahtbügel-Behälter zur Verfügung zu stellen.

Die Lösung dieser Aufgabe ergibt sich in Verbindung mit den Merkmalen der Oberbegriffe der Ansprüche 1 und 5 erfindungsgemäß im Zusammenhang mit den technischen Merkmalen derer kennzeichnenden Teile.

Bei der Konstruktion der erfindungsgemäßen Vorrichtung wurde insbesondere darauf Wert gelegt, dass die Bereitstellungsmagazine und die Positionierflächen bzw.

Führungskörper, die eine Positionierung bewirken, nicht in den Bewegungsablauf der Fügebewegungen einbezogen werden, diese also jetzt vorteilhafterweise starr ortsgebunden sind und die entsprechenden Fügebewegungen durch Schieber, Greifer und Bürsten mittels Antriebselementen wie Zylindern, Elektromagneten und Motoren entsprechend erzeugt werden. Dies hat zur Folge, dass Zuführ,- Weitertransport,- und Entladevorgänge am und mit dem Behälter und dem Deckel selber erfolgen und die Montagevorrichtung ortsfest installiert ist.

Der eigentliche Fügevorgang wurde erfindungsgemäß in zwei Fügeabschnitte **I** und **II** unterteilt. Im Fügeabschnitt **I** wird der untere Behälter in einem ersten Montageautomaten mit dem unteren Einfassungsring verbunden und der Spannbügel und der Spannhebel montiert und im Fügeabschnitt **II** wird der untere Behälter in einem zweiten Montageautomaten mit dem Deckel verbunden.

Vorteilhaft ist insbesondere, dass die benötigten Einfassungsringe in Magazinen bereitgestellt, mittels Schubzungenmechanik vereinzelt und mittels Klauengreifermechanik zusammengedrückt werden, die Spangen in einem Gleitschienenmagazin bereitgestellt und mittels einer Messervereinzelungseinrichtung vereinzelt werden und dass der Deckel mittels einer Kippvereinzelungseinrichtung vereinzelt wird, sodass eine schnelle Arbeitsabfolge des Fügeverfahrens möglich wird, ohne dass, außer bei der Bestückung der Magazine, manuelle Tätigkeiten erforderlich wären,.

Nachfolgend wird die Vorrichtung und der Verfahrensablauf anhand von Zeichnungen näher beschrieben. Es zeigen:

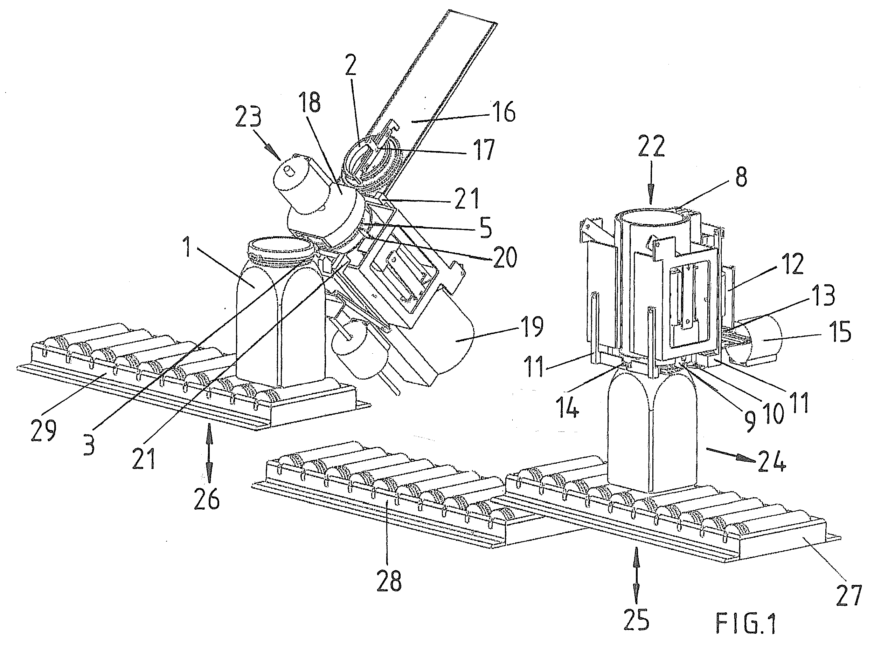

- Fig. 1: eine räumliche Ansicht der Vorrichtung von schräg vorne rechts,

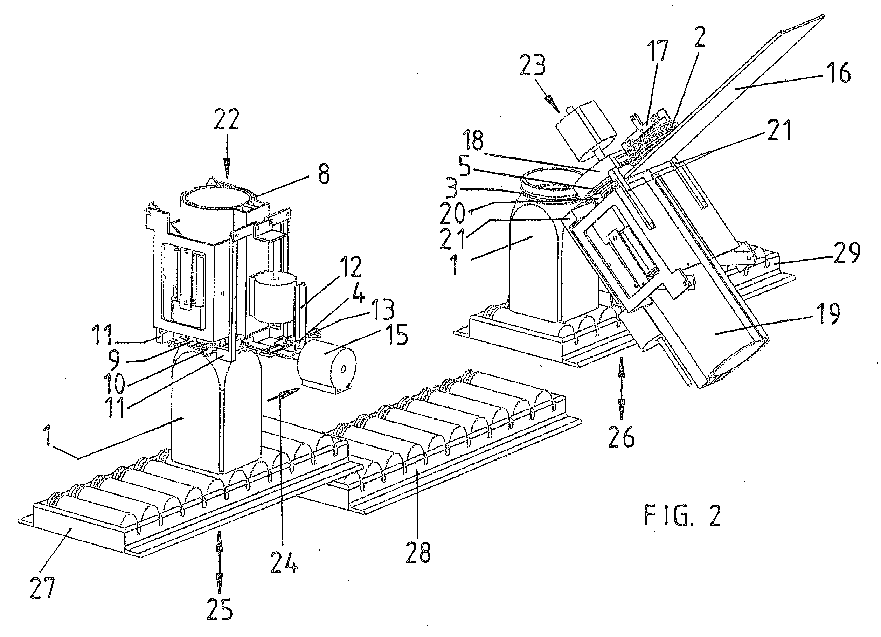

- Fig. 2: eine räumliche Ansicht der Vorrichtung gemäß Fig. 1 von schräg hinten links und

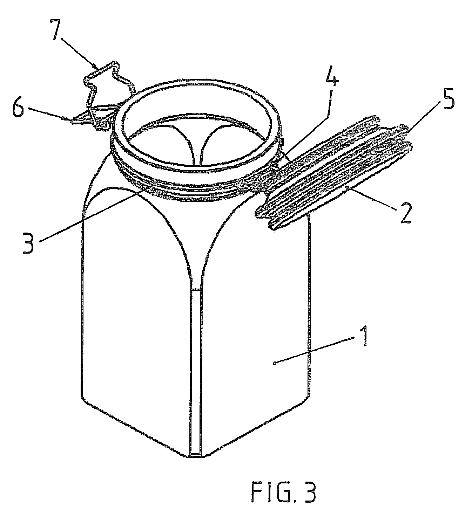

- Fig. 3: einen fertigen Drahtbügelbehälter in räumlicher Ansicht.

Die Bezugszeichen werden in der nachfolgenden Liste erläutert:

### Bezugszeichenliste:

1. Behälter
2. Deckel
3. Unterer Einfassungsring
4. Spange
5. Oberer Einfassungsring
6. Spannbügel
7. Spannhebel
8. Bereitstellungsmagazin
9. Zungen
10. Positionierkonsolen
11. Klauengreifer
12. Gleitschienenmagazin
13. Messervereinzelungsvorrichtung
14. Vorsprung des unteren Einfassungsringes
15. Schubzylinder
16. Rutsche
17. Kippvereinzelungsvorrichtung
18. Oberer Stempel
19. Bereitstellungsmagazin
20. Schubstangen
21. Klauengreifer
22. 1. Montageautomat
23. 2. Montageautomat
24. Transportrichtung
25. Vertikaler Zustellweg von I
26. Vertikaler Zustellweg von II
27. Transportweg (vertikal zustellbar)
28. Transportweg (fix)
29. Transportweg (vertikal zustellbar)

Die Montagevorrichtung besteht aus einem ersten Montageautomaten (22) für einen ersten Fügeabschnitt **I** und einem zweiten Montageautomaten (23) für einen zweiten Fügeabschnitt **II** und die Montageautomaten (22;23) sind starr und ortsgebunden über einem Transportweg (27;28;29) mit einer gemeinsamer Transportrichtung (24) angeordnet, wobei der Transportweg (27;28;29) partiell unterhalb eines der Montageautomaten (22;23) nach oben in dessen Richtung zustellbar ausgeführt ist und Fügebewegungen durch Schieber, Greifer und Bürsten erzeugt sind, die Antriebselemente wie Hydraulikzylinder oder Elektromotoren aufweisen.

Der Fügeabschnitt **I** im 1. Montageautomaten 22 besteht aus folgenden Arbeitsschritten: Bereitstellung des unteren Einfassungsringes 3 in einem vertikal angeordneten Bereitstellungsmagazin 8, in dem die Einfassungsringe 3 mittels Schwerkraft bis zu einem elastischen Stopper fallen; Vereinzelung der Einfassungsringe 3 mittels zweier geschobenen Zungen 9, die den einzelnen Einfassungsring 3 in eine exakte Position schieben; Positionierung des unteren Einfassungsringes 3 durch formschlüssigen Kontakt mit ausklappbaren Positionierkonsolen 10; Zusammendrücken des unteren Einfassungsrings 3 mittels zweier Klauengreifer 11 mit insgesamt vier Klauen, sodass der untere Einfassungsring 3 sich stramm in die im unteren Behälter 1 vorgesehene Nut einpresst; Bereithalten der nun benötigten Spangen 4 in einem vertikal angeordneten Gleitschienenmagazin 12, die durch Schwerkraft dieses Gleitschienenmagazin 12 bis vor eine Vereinzelungsvorrichtung hinuntergleiten; Vereinzelung der Spangen 4 mittels einer wippenden Messervereinzelungsvorrichtung 13 und Weiterrutschenlassen der vereinzelten Spange 4 auf dem Gleitschienenmagazin 12 nach unten.

Die Spange 4 wird nun mittels eines horizontal angeordneten Schubzylinders 15 auf dem Gleitschienenmagazin 12 soweit vorgeschoben, bis dass sie über einen Vorsprung des unteren Einfassungsringes 3 rutscht und diesen anschließend zusammen hält.

Zeitlich parallel wird dazu auf der gegenüberliegenden geschlossenen Seite des unteren Einfassungsbügels 3 der Spannhebel 7 in einem Magazin bereitgestellt, vereinzelt und mittels eines Greifers auf einen Vorsprung 14 des unteren Einfassungsringes 3 angeordnet. Zusätzlich wird der in einem vertikalen Magazin bereit gestellte Spannbügel 6 ebenso mit dem Spannhebel 7 mittels eines Greifers zusammengefügt. Danach öffnet sich die 1. Montagevorrichtung. Der Behälter 1 fährt mit den vormontierten Drahtelementen 3,4,6,7 nach unten und wird seitlich aus dem Maschinenbereich in Richtung auf den 2. Montageautomaten 23 heraus gefördert.

Im Fügeabschnitt **II** im 2. Montageautomaten 23 wird der untere Behälter 1 mit dem Deckel 2 verbunden. Er besteht aus folgenden Arbeitsschritten: Mehrere Deckel 2 werden mit der Oberseite nach unten weisend über Kopf in einem vertikal angeordneten Schachtmagazin und einer in ca. 45 Grad angeordneten Rutsche 16 bereitgestellt; Die Vereinzelung der Deckel 2 erfolgt durch eine wippende Kippvereinzelungsvorrichtung 17, die dafür sorgt, dass nur ein einzelner Deckel 2 auf der schrägen Ebene weiterrutscht, bis er auf einer Positionier-Mulde seine Position erreicht; Zusätzlich wird der Deckel 2 mit einem oberen Stempel 18 zentriert und in Position gehalten; Die Bereitstellung des oberen Einfassungsringes 5 erfolgt durch ein vertikales Bereitstellungsmagazin 19, das die Einfassungsringe 5 dem 2. Montageautomaten 23 von unten mittels einer Bürstenförderung zuführt; Die Vereinzelung der oberen Einfassungsringe 5 erfolgt mittels zweier geschobenen Schubzungen, allerdings entgegen der Schwerkraft nach oben, die den vereinzelten Einfassungsring 5 in eine exakte Position schieben; Die Positionierung ist in diesem Fall vorgegeben durch die Form des Deckels 2; Zusätzliche Positionier-Konsolen sind hier nicht notwendig; Zusammendrücken des oberen Einfassungsrings 5 mittels zweier Klauengreifer 21 mit insgesamt vier Klauen, sodass der obere Einfassungsring 5 sich stramm in die im Deckel 2 vorgesehene Nut einpresst. Nun wird der in Bereitstellung stehende Behälter 2 vertikal nach oben gefördert und so in Position gebracht, dass der untere Einfassungsring 3 in den oberen Einfassungsring 5 einhakt; Danach werden alle Spann- und Positionier-Vorrichtungen gelöst und der Behälter 1 wird mitsamt Deckel 2 aus der 2. Montagevorrichtung seitlich heraus gefördert.

## Patentansprüche

1. Verfahren zur Montage eines Drahtbügel-Behälters aus einem unteren Behälter (1), einem oberen Deckel (2) sowie mehreren Drahtelementen (3;4;5;6;7), bestehend aus einem unteren Einfassungsring (3), einer Spange (4), einem oberen. Einfassungsring (5), einem Spannbügel (6) und einem Spannhebel (7), die nach Abschluss der Montage ein Klappscharnier und einen Klemmverschluss bilden, **dadurch gekennzeichnet, dass** in einem ersten Fügeabschnitt I in einem 1. Montageautomaten (22) der untere Behälter (1) mit einem unteren Einfassungsring (3) versehen und der Spannbügel (6) und der Spannhebel (7) montiert werden und in einem zweiten Fügeabschnitt II in einem zweiten Montageautomaten (23) der Deckel (2) mit dem oberen Einfassungsring (5) versehen und der untere Behälter (1) mit dem Deckel (5) verbunden wird.

2. Verfahren nach Anspruch 1, **dadurch gekennzeichnet, dass** die Einfassungsringe (3;5) in Bereitstellungsmagazinen (8;19) bereitgestellt, mittels Schubzungenmechanik vereinzelt und mittels Klauengreifermechanik zusammengedrückt werden, die Spangen (4) in einem Gleitschienenmagazin (12) bereitgestellt und mittels einer Messervereinzelungsvorrichtung (13) vereinzelt werden und der Deckel (2) mittels einer Kippvereinzelungseinrichtung (17) vereinzelt wird.

3. Verfahren nach Anspruch 1, **dadurch gekennzeichnet, dass** der erste Fügeabschnitt **I** des 1. Montageautomaten (22) folgende Arbeitsschritte aufweist: Bereitstellung des unteren Einfassungsringes (3) in einem vertikal angeordneten Bereitstellungsmagazin (8), in dem die Einfassungsringe (3) mittels Schwerkraft bis zu einem elastischen Stopper fallen; Vereinzelung der unteren Einfassungsringe (3) mittels zweier geschobener Zungen (9), die den einzelnen Einfassungsring (3) in eine exakte Position schieben; Positionierung des unteren Einfassungsringes (3) durch formschlüssigen Kontakt mit vier ausklappbaren Positionierungskonsolen (10); Zusammendrücken des unteren Einfassungsringes (3) mittels Klauengreifern (11), mit insbesondere vier Klauen, sodass der untere Einfassungsring (3) sich stramm in die im unteren Behälter (1) vorgesehene Nut einpresst; schwerkraftbedingtes Hinuntergleitenlassen der in einem vertikal angeordneten Gleitschienenmagazin (12) bereit gehalten Spangen (4) bis vor eine Messervereinzelungsvorrichtung (13); Vereinzelung der Spangen (4) mittels der wippenden Messervereinzelungsvorrichtung (13) und weiter Nachuntenrutschenlassen der vereinzelten Spange (4) in dem Gleitschienenmagazin (12); Vorschieben der Spange (4) mittels eines horizontal angeordneten Schubzylinders (15) in dem Gleitschienenmagazin (12) bis sie über den einen Vorsprung des unteren Einfassungsbügels, diesen zusammenhaltend, rutscht, wobei zeitlich parallel auf der gegenüberliegenden geschlossenen Seite des unteren Einfassungsringes (5) der Spannhebel (7) in einem Magazin bereitgestellt, vereinzelt und mittels eines Greifers auf einen Vorsprung (14) des unteren Einfassungsring (3) angeordnet wird, und zusätzlich der in einem vertikalen Magazin bereitgestellte Spannbügel (6) ebenso mit dem Spannhebel (7) mittels eines Greifers zusammengefügt wird, woraufhin sich die 1. Montagevorrichtung (22) öffnet und der untere Behälter (1) mit den vormontierten Drahtelementen nach unten fährt und vertikal aus dem Maschinenbereich heraus gefördert wird.

4. Verfahren nach Anspruch 3, **dadurch gekennzeichnet, dass** der zweite Fügeabschnitt **II** des 2. Montageautomaten (23) folgende Arbeitsschritte aufweist: dem Montageautomaten (23) werden mehrere Deckel (2) mit der Oberseite nach unten weisend in einem vertikal angeordneten Schachtmagazin und einer in ca. 45 Grad angeordnete Rutsche (16) bereitgestellt, anschließend sorgt eine wippende Kippvereinzelungsvorrichtung (17) dafür, dass nur ein einzelner Deckel (2) auf der schrägen Ebene weiter rutscht, bis er auf einer Positionier-Mulde seine Position erreicht, wo er mit einem oberen Stempel (18) zentriert und in Position gehalten wird, gleichzeitig erfolgt die Bereitstellung des oberen Einfassungsringes (5) durch ein vertikales Bereitstellungsmagazin (19), welches die Einfassungsringe (5) dem 2. Montageautomaten von unten mittels Bürstenförderung zuführt, die durch zwei Schubzungen entgegen der Schwerkraft nach oben vereinzelt werden, wobei die Positionierung durch die Form des Deckels (2) vorgegeben ist, anschließend erfolgt das Zusammendrücken des oberen Einfassungsrings (5) mittels zweier Klauengreifer (21) mit vier Klauen, sodass der obere Einfassungsring (5) stramm in die im Deckel (2) vorgesehene Nut eingepresst wird, woraufhin der in Bereitstellung stehende untere Behälter (1) vertikal nach oben gefördert und so in Position gebracht wird, dass der untere Einfassungsring (3) in den oberen Einfassungsring (5) einhakt, wonach alle Spann- und Positionier-Vorrichtungen gelöst und der Behälter (1) mitsamt Deckel (2) aus der 2. Montagevorrichtung vertikal heraus gefördert wird.

5. Vorrichtung zur Montage eines Drahtbügel-Behälters aus einem unteren Behälter (1), einem oberen Deckel (2) sowie mehreren Drahtelementen, bestehend aus einem unteren Einfassungsring (3), einer Spange (4), einem oberen Einfassungsring (5), einem Spannbügel (6) und einem Spannhebel (7), die nach Abschluss der Montage ein Klappscharnier und einen Klemmverschluss bilden, **dadurch gekennzeichnet, dass** die Montagevorrichtung aus einem ersten Montageautomaten (22) für einen ersten Fügeabschnitt **I**, in welchem im Betrieb der untere Behälter (1) mit einem unteren Einfassungsring (3) versehen und der Spannbügel (6) und der Spannhebel (7) montiert werden, und einem zweiten Montageautomaten (23) für einen zweiten Fügeabschnitt **II**, in welchem im Betrieb der Deckel (2) mit dem oberen Einfassungsring (5) versehen und der untere Behälter (1) mit dem Deckel (2) verbunden wird, besteht und die Montageautomaten (22;23) starr und ortsgebunden über einem Transportweg (27;28;29) mit einer gemeinsamer Transportrichtung (24) angeordnet sind, der Transportweg (27;28;29) partiell unterhalb eines Montage-automaten (22;23) über vertikale Zustellwege (25;26) nach oben in dessen Richtung zustellbar ausgeführt ist und dass Fügebewegungen durch Schieber, Greifer und Bürsten erzeugt sind, die Antriebselemente wie Hydraulikzylinder oder Elektromotoren aufweisen.

6. Vorrichtung nach Anspruch 5, **dadurch gekennzeichnet, dass** sie Bereitstellungsmagazine (8;19) aufweist, in denen die Einfassungsringe (3;5) bereitgestellt werden, dass sie eine Schubzungenmechanik aufweist, mittels der die Einfassungsringe (3;5) vereinzelt werden, dass sie eine Klauengreifermechanik aufweist, mittels derer die Einfassungsringe (3;5) zusammendrückbar sind, dass sie ein Gleitschienenmagazin (12) aufweist, in dem die Spangen (4) bereitstellbar sind, dass sie eine Messervereinzelungseinrichtung (13) aufweist, mittels derer die Spangen (4) vereinzelbar sind und dass sie eine Kippvereinzelungseinrichtung (17) aufweist, mittels derer die Deckel (2) vereinzelbar sind.

## Claims

1. Method for assembling a wire-clip container from a lower container (1), an upper lid (2) and a plurality of wire elements (3; 4; 5; 6; 7), consisting of a lower surrounding ring (3), a clasp (4), an upper surrounding ring (5), a clamp (6) and a clamping lever (7), which, after completion of the assembly, form a folding hinge and a clamping fastener, **characterized in that**, in a first joining portion I in a first automated assembly machine (22), the lower container (1) is provided with a lower surrounding ring (3) and the clamp (6) and the clamping lever (7) are assembled, and in a second joining portion II in a second automated assembly machine (23), the lid (2) is provided with the upper surrounding ring (5) and the lower container (1) is connected to the lid (5).

2. Method according to Claim 1, **characterized in that** the surrounding rings (3; 5) are supplied in supply magazines (8; 19), are separated by means of a push-tongue mechanism and are compressed by means of a claw-gripper mechanism, the clasps (4) are supplied in a sliding-rail magazine (12) and are separated by means of a blade separating apparatus (13), and the lid (2) is separated by means of a tilting separating device (17).

3. Method according to Claim 1, **characterized in that** the first joining portion I of the first automated assembly machine (22) has the following working steps: the lower surrounding ring (3) is supplied in a vertically arranged supply magazine (8) in which the surrounding rings (3) drop by means of gravitational force as far as an elastic stopper; the lower surrounding rings (3) are separated by means of two pushed tongues (9) which push the individual surrounding ring (3) into an exact position; the lower surrounding ring (3) is positioned by form-fitting contact with four positioning brackets (10) that are able to be flapped out; the lower surrounding ring (3) is compressed by means of claw grippers (11), having in particular four claws, such that the lower surrounding ring (3) is pressed tightly into the groove provided in the lower container (1); the clasps (4) that are held in a vertically arranged sliding-rail magazine (12) are allowed to slide down under the force of gravity until they arrive in front of a blade separating apparatus (13); the clasps (4) are separated by means of the seesawing blade separating apparatus (13) and the separated clasp (4) is allowed to slide down further in the sliding-rail magazine (12); the clasp (4) is advanced by means of a horizontally arranged sliding cylinder (15) in the sliding-rail magazine (12) until it slides over the one protrusion of the lower surrounding clip, holding the latter together, wherein, in a temporally parallel manner on the opposite closed side of the lower surrounding ring (5), the clamping lever (7) is supplied in a magazine, separated and arranged by means of a gripper on a protrusion (14) of the lower surrounding ring (3), and additionally the clamp (6) supplied in a vertical magazine is similarly joined together with the clamping lever (7) by means of a gripper, whereupon the first assembly apparatus (22) opens and the lower container (1) having the preassembled wire elements travels downwards and is conveyed vertically out of the machine region.

4. Method according to Claim 3, **characterized in that** the second joining portion II of the second automated assembly machine (23) has the following working steps: a plurality of lids (2) with the top side facing downwards are supplied to the automated assembly machine (23) in a vertically arranged shaft magazine and a chute (16) arranged at approximately 45 degrees, subsequently, a seesawing tilting separating apparatus (17) ensures that only an individual lid (2) slides further on the inclined plane until it reaches its position on a positioning recess, where it is centred and held in position by way of an upper die (18), at the same time the upper surrounding ring (5) is supplied by a vertical supply magazine (19) which feeds the surrounding rings (5) to the second automated assembly machine from below by means of brush delivery, said surrounding rings being separated upwards counter to the force of gravity by two push tongues, wherein the positioning is defined by the shape of the lid (2), subsequently, the upper surrounding ring (5) is compressed by means of two claw grippers (21) having four claws, such that the upper surrounding ring (5) is pressed tightly into the groove provided in the lid (2), whereupon the lower container (1) that is standing by is conveyed vertically upwards and is brought into position such that the lower surrounding ring (3) engages in the upper surrounding ring (5), after which all clamping and positioning apparatuses are released and the container (1) together with the lid (2) is conveyed vertically out of the second assembly apparatus.

5. Apparatus for assembling a wire-clip container from a lower container (1), an upper lid (2) and a plurality of wire elements, consisting of a lower surrounding ring (3), a clasp (4), an upper surrounding ring (5), a clamp (6) and a clamping lever (7), which, after completion of the assembly, form a folding hinge and a clamping fastener, **characterized in that** the assembly apparatus consists of a first automated assembly machine (22) for a first joining portion I, in which, in operation, the lower container (1) is provided with a lower surrounding ring (3) and the clamp (6) and the clamping lever (7) are assembled, and a second automated assembly machine (23) for a second joining portion II, in which, in operation, the lid (2) is provided with the upper surrounding ring (5) and the lower container (1) is connected to the lid (2), and the automated assembly machines (22; 23) are arranged in a rigid and stationary manner over a transport path (27; 28; 29) having a common transport direction (24), the transport path (27; 28; 29) is embodied so as to be partially advanceable upwardly in the direction of an automated assembly machine (22; 23) via vertical advancing paths (25; 26) beneath same, and **in that** joining movements are brought about by sliders, grippers and brushes which have drive elements such as hydraulic cylinders or electric motors.

6. Apparatus according to Claim 5, **characterized in that** it has supply magazines (8; 19) in which the surrounding rings (3; 5) are supplied, **in that** it has a push-tongue mechanism by means of which the surrounding rings (3; 5) are separated, **in that** it has a claw-gripper mechanism by means of which the surrounding rings (3; 5) are compressible, **in that** it has a sliding-rail magazine (12) in which the clasps (4) are able to be supplied, **in that** it has a blade separating device (13) by means of which the clasps (4) are able to be separated, and **in that** it has a tilting separating device (17) by means of which the lids (2) are able to be separated.

## Revendications

1. Procédé de montage d'un récipient à anse en fil métallique composé d'un récipient inférieur (1), d'un cache supérieur (2) ainsi que de plusieurs éléments de fil métallique (3 ; 4 ; 5 ; 6 ; 7), composés d'une bague de sertissage (3) inférieure, d'une agrafe (4), d'une bague de sertissage (5) supérieure, d'un étrier de serrage (6) et d'un levier de serrage (7) formant à la fin du montage une charnière rabattable et une fermeture serrable, **caractérisé en ce que** dans une première section d'assemblage I prévue dans un 1^{er} automate de montage (22), le récipient inférieur (1) est pourvu d'une bague de sertissage (3) inférieure et que l'étrier de serrage (6) et le levier de serrage (7) sont montés et que dans une deuxième section d'assemblage Il prévue dans un deuxième automate de montage (23), le cache (2) est pourvu de la bague de sertissage (5) supérieure et le récipient inférieur (1) est relié au cache (5).

2. Procédé selon la revendication 1, **caractérisé en ce que** les bagues de sertissage (3 ; 5) sont mises à disposition dans des magasins de mise à disposition (8 ; 19), séparées à l'aide d'un mécanisme de languettes de poussée et comprimées ensemble à l'aide d'un mécanisme de grippe-fil, les agrafes (4) étant mises à disposition dans un magasin à rails glissants (12) et séparées à l'aide d'un dispositif de séparation à lames (13) et le cache (2) étant séparé au moyen d'un dispositif de séparation à bascule (17).

3. Procédé selon la revendication 1, **caractérisé en ce que** la première section d'assemblage I du 1^{er} automate de montage (22) présente les étapes de travail suivantes : mise à disposition de la bague de sertissage (3) inférieure dans un magasin de mise à disposition (8) disposé verticalement dans lequel les bagues de sertissage (3) chutent jusqu'à une butée élastique du fait de la pesanteur ; séparation des bagues de sertissage (3) inférieures à l'aide de deux languettes (9) poussées poussant la bague de sertissage (3) individuelle dans une position exacte ; positionnement de la bague de sertissage (3) inférieure par contact réalisé par complémentarité de formes avec quatre consoles de positionnement (10) rabattables vers l'extérieur ; compression de la bague de sertissage (3) inférieure à l'aide de grippe-fil (11), avec notamment quatre pattes, de sorte que la bague de sertissage (3) inférieure se comprime de façon tendue dans la rainure prévue dans le récipient inférieur (1) ; glissement provoqué par la pesanteur des agrafes (4) déjà maintenues dans un magasin à rails glissants (12) disposé verticalement jusqu'à atteindre un dispositif de séparation à lames (13) ; séparation des agrafes (4) à l'aide du dispositif de séparation à lames (13) effectuant un mouvement de balayage et glissement encore davantage vers le bas de l'agrafe (4) séparée dans un magasin à rails glissants (12); poussée en avant de l'agrafe (4) à l'aide d'un cylindre de poussée (15) disposé de façon horizontale dans le magasin à rails glissants (12) jusqu'à ce qu'elle glisse au-dessus d'une saillie de la bague de sertissage inférieure, tout en la maintenant, le levier de serrage (7) étant mis à disposition simultanément et séparément dans un magasin, parallèlement sur le côté fermé opposé de la bague de sertissage (5) inférieure et disposé à l'aide d'un grappin sur une saillie (14) de la bague de sertissage (3) inférieure et en outre l'étrier de serrage (6) mis à disposition dans un magasin vertical est également assemblé au levier de serrage (7) à l'aide d'un grappin, à la suite de quoi le 1^{er} dispositif de montage (22) s'ouvre et le récipient inférieur (1) avance vers le bas avec les éléments de fil métallique prémontés et est transporté verticalement hors de la zone des machines.

4. Procédé selon la revendication 3, **caractérisé en ce que** la deuxième section d'assemblage II du 2^{e} automate de montage (23) présente les étapes de travail suivantes : plusieurs caches (2) sont mis à disposition de l'automate de montage (23) avec le côté supérieur orienté vers le bas dans un magasin à buse disposé verticalement et une glissière (16) disposée à approximativement 45 degrés, puis un dispositif de séparation à bascule (17) effectuant un mouvement de balancement veille à ce que seul un cache (2) individuel glisse davantage sur un plan oblique jusqu'à atteindre sa position sur un bac de positionnement où il est centré à l'aide d'un tampon supérieur (18) et maintenu en place, la mise à disposition de la bague de sertissage (5) supérieure se produit simultanément au travers d'un magasin de mise à disposition (19) vertical amenant par en bas les bagues de sertissage (5) au 2^{e} automate de montage par le biais de transport par brosses, lesdites bagues étant séparées par en haut par deux languettes de poussée, à l'encontre de la pesanteur, le positionnement étant prédéfini par la forme du cache (2), la compression de la bague de sertissage (5) supérieure se produisant ensuite à l'aide de deux grippe-fil (21) équipés de quatre pattes de sorte que la bague de sertissage (5) supérieure est comprimée de façon tendue dans la rainure prévue dans le cache (2), à la suite de quoi le récipient inférieur (1) mis à disposition est transporté verticalement vers le haut et ainsi amené en position, la bague de sertissage (3) inférieure s'accrochant dans la bague de sertissage (5) supérieure, à la suite de quoi tous les dispositifs de serrage et de positionnement sont desserrés et le récipient (1) est transporté verticalement hors du 2^{e} dispositif de montage, conjointement avec le cache (2).

5. Dispositif de montage d'un récipient à anse en fil métallique composé d'un récipient inférieur (1), d'un cache supérieur (2) ainsi que plusieurs éléments de fil métallique, composés d'une bague de sertissage (3) inférieure, d'une agrafe (4), d'une bague de sertissage (5) supérieure, d'un étrier de serrage (6) et d'un levier de serrage (7) formant à la fin du montage une charnière rabattable et une fermeture serrable, **caractérisé en ce que** le dispositif de montage se compose d'un premier automate de montage (22) prévu pour une première section d'assemblage I dans laquelle, en fonctionnement, le récipient inférieur (1) est pourvu d'une bague de sertissage (3) inférieure et dans laquelle l'étrier de serrage (6) et le levier de serrage (7) sont montés et d'un deuxième automate de montage (23) prévu pour une deuxième section d'assemblage Il dans laquelle, en fonctionnement, le cache (2) est pourvu d'une bague de sertissage (5) supérieure et dans laquelle le récipient inférieur (1) est relié au cache (2) et les automates de montage (22 ; 23) étant disposés de façon rigide et fixe sur place, via une voie de transport (27 ; 28 ; 29), avec une direction de transport (24) commune, ladite voie de transport (27 ; 28 ; 29) étant réalisée de façon réglable vers le haut dans sa direction, partiellement en dessous d'un automate de montage (22 ; 23), via une course de réglage (25 ; 26) verticale et que les mouvements d'assemblage sont produits par le biais de poussoirs, de grappins et de brosses comportant des éléments d'entraînement tels que des vérins hydrauliques ou des moteurs électriques.

6. Dispositif selon la revendication 5, **caractérisé en ce qu'**il comporte des magasins de mise à disposition (8 ; 19) dans lesquels les bagues de sertissage (3 ; 5) sont mises à disposition, qu'il comporte un mécanisme de languettes de poussée à l'aide duquel les bagues de sertissage (3 ; 5) sont séparées, qu'il comporte un mécanisme de grippe-fil à l'aide duquel les bagues de sertissage (3 ; 5) peuvent être comprimées ensemble, qu'il comporte un magasin à rails glissants (12) dans lequel les agrafes (4) peuvent être mises à disposition, qu'il comporte un dispositif de séparation à lames (13) à l'aide duquel les agrafes (4) peuvent être séparées et qu'il comporte un dispositif de séparation à bascule (17) à l'aide duquel les caches (2) peuvent être séparés.
